Europäisches Patentamt

European Patent Office

Office européen des brevets

(19)

(11) Publication number: **0 078 941**
**A1**

(12) # EUROPEAN PATENT APPLICATION

(21) Application number: **82109604.7**

(22) Date of filing: **18.10.82**

(51) Int. Cl.³: **H 01 S 3/091**
**H 01 S 3/16**

(30) Priority: **06.11.81 US 318763**

(43) Date of publication of application:
**18.05.83 Bulletin 83/20**

(84) Designated Contracting States:
**DE FR GB IT**

(71) Applicant: **ALLIED CORPORATION**
**Columbia Road and Park Avenue P.O. Box 2245R (Law Dept.)**
**Morristown New Jersey 07960(US)**

(72) Inventor: **Pressley, Robert Joseph**
**8093 Presidio Dr.**
**Cupertino California 95014(US)**

(74) Representative: **Myerscough, Philip Boyd et al,**
**J.A.Kemp & Co. 14, South Square Gray's Inn**
**London, WC1R 5EU(GB)**

(54) **Light-emitting-diode-pumped alexandrite laser.**

(57) A light-emitting-diode-pumped alexandrite laser is provided. The laser comprises an alexandrite medium, pumped with one or more light-emitting diodes (LEDs) and enclosed with mirrors to form an optical resonator. By suitable choice of LED composition, a match between LED output and alexandrite absorption provides high optical pumping efficiency. Compact, lightweight construction; long life; and capability for broadly tunable laser output are also achieved.

FIG. 1

EP 0 078 941 A1

DESCRIPTION

LIGHT-EMITTING-DIODE-PUMPED ALEXANDRITE LASER

BACKGROUND OF THE INVENTION

1. Field of the Invention

This invention relates to a laser in which the laser medium is alexandrite and is pumped by one or more light-emitting diodes (LEDs).

2. Description of the Prior Art

Reports on LED-pumping of solid state lasers have appeared in both patents and technical publications. Among these are U.S. Pat. 3,663,893, issued May 16, 1972, to Ostermayer; U.S. Pat. 3,821,663, issued June 28, 1974, to Brenner; and L. J. Rosenkrantz, J.Appl. Phys. 43, 4603 (1972). The only laser medium specifically disclosed in these references is Nd:YAG. The YAG is pumped with infrared output from GaAs. However, the narrow absorption band of the $Nd^{3+}$ ion in YAG makes these lasers rather inefficient. Furthermore, since laser output is decreased at elevated temperatures, the heat generated by the LED must be dissipated using auxiliary cooling means.

A tunable laser using alexandrite ($BeAl_2O_4:Cr^{3+}$) as the laser medium was disclosed in U.S. Pat. 4,272,733, issued June 9, 1981, to J.C. Walling et al. The inventors disclosed both coherent and incoherent optical pumping sources. Incoherent sources specifically disclosed were gaseous discharge lamps and metallic vapor sources.

## SUMMARY OF THE INVENTION

The term "alexandrite" as used in this specification and the appended claims is intended to mean trivalent chromium-doped beryllium aluminate $(BeAl_2O_4:Cr^{3+})$ of the chrysoberyl structure.

In accordance with the present invention, a laser instrument is provided. The laser comprises a laser medium comprising a single crystal of alexandrite and having two ends; means for exciting the laser medium to emit coherent radiation, said means comprising at least one light-emitting diode adjoining the laser medium and positioned so that the light from the diode is directed toward the laser medium; and mirrors forming an optical resonator, said resonator enclosing the ends of the laser medium and adapted for maintaining laser oscillations between the mirrors. Throughout this specification, where reference is made to "an" LED it is understood to include a plurality of LEDs.

The invention provides an efficient laser that can be operated without requiring auxiliary cooling means for the laser rod.

## BRIEF DESCRIPTION OF THE DRAWINGS

Fig. 1 depicts a schematic of an LED-pumped laser of the present invention.

Fig. 2 is a sectional view of a laser medium and adjoining LED.

Fig. 3 is a sectional view of an alternative geometry for the laser medium and adjoining LED.

## DETAILED DESCRIPTION OF THE INVENTION

The present invention provides an LED-pumped alexandrite laser system. The system comprises an alexandrite single crystal as the laser medium, at least one LED for pumping the alexandrite, and mirrors for enclosing the alexandrite and maintaining laser oscillations between the mirrors. LEDs provide several advantages as optical pumps for solid state lasers. They permit compact, lightweight, and rugged construction as well as high reliability and long life.

Operating life in excess of 100,000 hours on-time is readily achieved.

Several characteristics of alexandrite make it particularly suitable for LED-pumping and provide unique advantages. Unlike other solid state laser materials, alexandrite shows broad absorption over the visible spectrum between 380 and 680 nm. Absorption is particularly strong in bands centered near 410 and 590 nm. The threshold pump energy requirement is about 10 J for a 6 mm diameter x 76 mm rod, and may be determined for a particular case by routine experimentation.

For optimal pumping, the LEDs are in close thermal, as well as optical, contact with the medium. Consequently, as the LEDs provide the desirable light energy to pump the laser medium, the heat generated may cause the temperature of the medium to increase substantially. Unlike the case in other solid state lasers, both the gain and the slope efficiency of the alexandrite laser increase with increasing temperature, while the threshold energy decreases. Consequently, the LED-pumped alexandrite laser requires no auxiliary laser medium cooling means. This is not to suggest, however, that performance improves monotonically with increasing temperature. The excited state lifetime decreases with temperature. For example, at 80°C, the fluorescent decay time is 120 µs. (See Sam et al., Proceedings of SPIE 247, 130 (1980)). Efficient pumping requires that the lightpumping pulse be short compared with the fluorescent lifetime. Thus, high temperatures limit operation to high-intensity, short-duration pumping, and optimum operating temperature may involve a compromise between increased gain and decreased fluorescent lifetime.

Alexandrite lasers are unique among solid state lasers in that their output is broadly tunable over a range from deep red to infrared. To realize the tunable feature, a laser would incorporate a tuning means between the mirrors of the optical resonator. The tuning means may be of a conventional type known in the art, such as a birefringent filter, prism, optical grating, or the like. The tunable range of the alexandrite laser is about 700 to 820 nm and may be extended to longer or shorter wave lengths by using high excitation energy.

The geometry of the alexandrite laser medium is preferably chosen to take advantage of the material's characteristics discussed above. Although the alexandrite may be rod-shaped, with a substantially circular cross section, a thin elongated slab of alexandrite, having a substantially rectangular cross section, is preferred for pumping efficiency and fabrication convenience, particularly when the pump wavelength is strongly absorbed. The long dimension of the slab is preferably along the a-c plane of the crystal. The thickness (i.e. shortest dimension) of the slab is preferably chosen so that light absorption is substantially uniform throughout the volume. This can be accomplished, for example, by arraying LEDs along opposite faces of the slab and choosing the thickness that absorbs about 80% of the incident light. To maximize pumping efficiency the LEDs preferably cover the entire surface of the two largest faces. The b axis of the crystal is preferably normal to those faces to maximize absorption in the 590 nm wavelength region. Parts of the face surfaces that are not covered with LEDs are preferably coated with a reflective coating to maximize pumping efficiency. For the same reason, the side surfaces are preferably coated with a reflective coating as well. The end surfaces are coated with either reflective or dielectric anti-reflective coatings, depending on whether the optical resonator is to be limited to the laser medium or extend beyond the ends, respectively.

Both for convenience and pumping efficiency, it is generally desirably to have the LEDs in contact with the laser medium; however, they may be offset from the surface. The LEDs may be adhered to the alexandrite using transparent high temperature epoxy of the kind well known in the art. Alternatively, the LEDs may be mechanically held in contact with, or closely spaced from, the alexandrite.

Preferably, the light output of the LED matches the peak absorption of alexandrite. Thus, LEDs that emit in the visible spectrum, preferably near 590 nm are preferred. Among LEDs having suitable output wavelength are N-doped GaP, emitting at 565 nm, and N-doped $GaAs_{0.15}P_{0.85}$, which has peak emission at 585 nm. Such LEDs are commercially available from several sources.

The output of the LED is reduced by high temperature operation. Depending on the application and the need to maximize LED output, it may, therefore, be desirable to cool the LED. The cooling means may be of a conventional type known in the art, such as fluid cooling or cooling by good thermal contact with a heat sink. To some extent, the alexandrite itself acts as a heat sink. If the LED covers both of the largest surfaces of an alexandrite slab or the large surface of an elongated rod, and coolant surrounds the LEDs, there is relatively little direct cooling of the alexandrite; however, as discussed above, alexandrite gain increases with temperature and thus cooling of the alexandrite is generally not essential.

A preferred manner of operating the laser of the present invention is high-frequency pulsed operation. To accomplish this, the LED is triggered at high frequencies using conventional electronic means, such as TTL-controlled or CMOS circuits operatively connected to the LED. Since high-power, high-frequency operation generates heat that, in turn, can cause reduced LED output, optimum operation involves a compromise among frequency and power level of the LED input and cooling parameters. In a particular application, optimum operating conditions can be determined by routine experimentation.

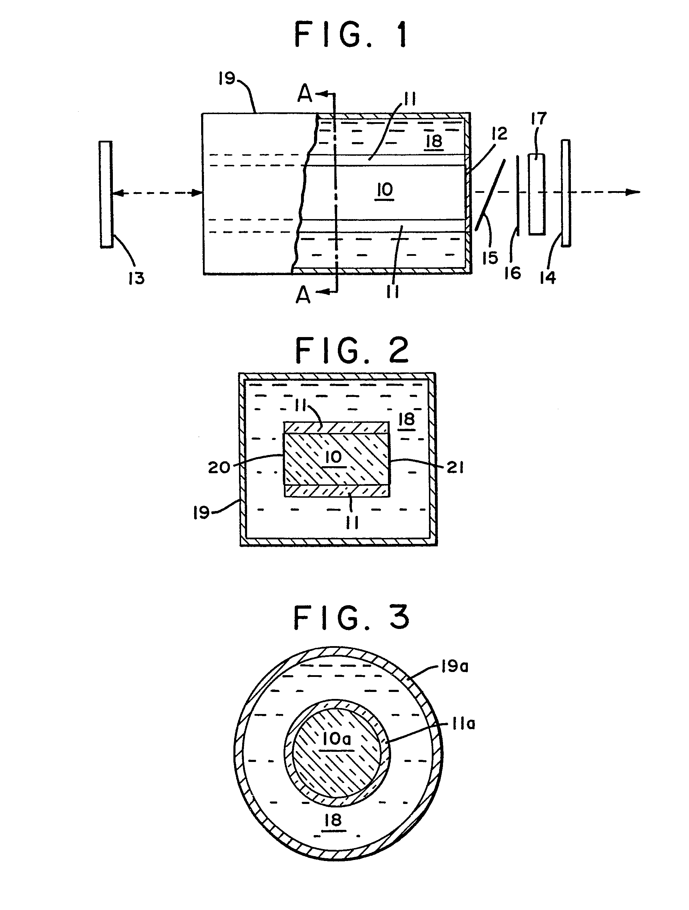

Fig. 1 depicts a schematic of a laser of the present invention. A single crystal of alexandrite 10 is the laser medium and is optically pumped by at least one LED 11. Coatings 12 on the ends of laser medium 10 may be reflective coatings or dielectric anti-reflective coatings. In the embodiment shown, the coatings are anti-reflective and laser oscillations are maintained between completely reflecting mirror 13 and partially reflecting mirror 14. Optional tuning element 15 may be adjusted to provide the output wave length desired. Optionally, the laser may also include means for Q-switching. These means may comprise a saturable dye absorber, an acousto-optic Q-switch, or, as shown in Fig. 1, a polarizer 16 and a Pockels cell 17 placed in the beam path. Polarizer 16 may be omitted, particularly at low excitation power. If necessary to optimize LED performance, medium 10 and LED 11 may be cooled by fluid 18 circulating through surrounding enclosure 19. Fluid 18 may be air, water, or a cryogenic liquid and may be preheated by conventional means to achieve better temperature control.

Fig. 2 shows a section taken along the line A-A of Fig. 1. Side surfaces of the medium 10 preferably have reflective coatings 20 and 21. In addition, if the faces of the medium are not completely covered by LED 11, then the portions of the surface not covered by the LED are preferably reflective-coated.

Fig. 3 shows a section taken along line A-A of Fig. 1 in the embodiment where rod 10a and enclosure 19a have circular cross sections and the rod is pumped by LED 11a. In that embodiment, when rod 10a is completely surrounded by LED 11a, cooling fluid 18 does not come into direct contact with the laser medium. Alexandrite's high temperature operating capability uniquely permits that configuration.

I claim:

1. A laser instrument comprising:

(a) a laser medium comprising a single crystal of alexandrite and having two ends;

(b) means for exciting the laser medium to emit coherent radiation, said means comprising at least one light-emitting diode adjoining the laser medium and positioned so that the light from the diode is directed toward the laser medium; and

(c) mirrors forming an optical resonator, said resonator enclosing the ends of the laser medium and adapted for maintaining laser oscillations between the mirrors.

2. The laser of claim 1 in which the laser medium comprises an elongated slab having a substantially rectangular cross section perpendicular to its length.

3. The laser of claim 1 in which the laser medium comprises an elongated rod having a substantially circular cross section perpendicular to its length.

4. The laser of claim 1 in which the light-emitting diode comprises N-doped $GaAs_{0.15}P_{0.85}$.

5. The laser of claim 1 in which the light-emitting diode comprises N-doped GaP.

6. The laser of claim 1 further comprising tuning means for tuning the coherent radiation in a spectral range from red to infrared.

7. The laser of claim 1 further comprising means operatively connected to the light-emitting diode for exciting pulsed output from the light-emitting diode.

8. The laser of claim 1 further comprising means for cooling the light-emitting diode.

FIG. 1

FIG. 2

FIG. 3

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 997 853 (R.C.MORRIS AND C.F.CLINE) *Column 5, line 40 to column 6, line 14; figure 1* | 1,3,4, 5,7 | H 01 S 3/091 H 01 S 3/16 |
| Y | US-A-3 555 452 (J.W.NIELSEN AND G.C.FLORIO) *Abstract; column 6, lines 24-59* | 1,4,8 | |
| D,Y | US-A-4 272 733 (J.C.WALLING et al.) *Column 3, lines 6-17; column 4, lines 35-39; column 6, lines 20-51; figure 2* | 1,3,6 | |
| A | US-A-3 711 789 (E.G.DIERSCHKE) *Abstract; column 1, lines 4-40* | 1,3,8 | |
| A | US-A-3 851 268 (S.SINGH AND L.G.VAN UITERT) *Column 2, lines 3-29* | 1,3 | TECHNICAL FIELDS SEARCHED (Int. Cl. ³) H 01 S 3/00 |
| A,D | US-A-3 821 663 (C.H.BRENNER) *Column 6, lines 28-61* | 1,3,4, 8 | |
| A,D | US-A-3 663 893 (F.W.OSTERMAYER) *Column 1, lines 31-60* | 1,3 | |

The present search report has been drawn up for all claims

| Place of search THE HAGUE | Date of completion of the search 15-02-1983 | Examiner HORAK G.I. |
|---|---|---|